# EUROPÄISCHE PATENTSCHRIFT

(11) **EP 3 854 273 B1**
(45) Veröffentlichungstag und Bekanntmachung des Hinweises auf die Patenterteilung: **05.07.2023**
(21) Anmeldenummer: 20153182.9
(22) Anmeldetag: 22.01.2020
(51) Int. Cl.: A47J 27/14, A47J 36/24

(54) **GARGERÄT FÜR GROSSKÜCHEN**
COOKING APPLIANCE FOR LARGE KITCHEN
APPAREIL DE CUISSON POUR CUISINES D'ÉTABLISSEMENTS DE RESTAURATION

(43) Veröffentlichungstag der Anmeldung: 28.07.2021
(73) Patentinhaber: MKN Maschinenfabrik Kurt Neubauer GmbH & Co. KG, 38300 Wolfenbüttel (DE)
(72) Erfinder: Hund, Hans-Jürgen, 38315 Gielde (DE); Kaczmarczyk, Marian, 38154 Königslutter am Elm (DE)
(74) Vertreter: Berghofer, Benedikt

(56) Entgegenhaltungen:
- EP-A1- 2 628 419
- WO-A1-2016/196796
- DE-B4-102011 116 273
- FR-A5- 2 070 617

## Beschreibung

Die vorliegende Erfindung betrifft ein Gargerät für Großküchen, einschließlich ein Großküchen-Druckgargerät, welches einen kippbaren tiegelförmigen Garbehälter aufweist.

In Großküchen werden kippbare tiegelförmigen Garbehälter dazu verwendet, flüssige Nahrungsmittel, wie beispielsweise Suppen, Saucen oder teilflüssige Nahrungsmittel, wie beispielsweise Gulasch, zu garen. Die in dem Garbehälter zubereitete Menge soll in der Regel nach der Zubereitung auf verschiedene kleinere Behälter aufgeteilt werden, um dann zu verschiedenen Empfängern transportiert oder möglicherweise auch einem weiteren von mehreren Bearbeitungsschritten zugeführt zu werden. Ein solches Verfahren zum Abfüllen von fließ- oder schüttfähigem Gargut aus einem Garraum eines Gargerätes ist beispielsweise aus der EP 2 532 287 B1 bekannt.

Ein Gerät des nächstkommenden Standes der Technik ist aus der DE 10 2011 116 273 B4 bekannt. Ein solches Gargerät weist einen kippbaren tiegelförmigen Garbehälter auf, der einen im Wesentlichen rechteckförmigen Garraum zur Aufnahme von insbesondere flüssigem oder teilflüssigem Gargut aufweist, wobei der Garbehälter einen Boden, eine Vorderwand, zwei Seitenwände und eine Rückwand aufweist, wobei jede der Wände aus einer Außenseite und einer davon beabstandeten Innenseite gebildet sind, die mit einer eine obere Abdeckfläche bildenden Abdeckplatte miteinander verbunden sind, wobei die Innenseiten der Wände den Garraum umschließen.

Der Garbehälter ist einseitig oder beidseitig in Gerätestützen drehbar gelagert und von einem Gerätedeckel verschließbar. Der Garbehälter weist in seiner Vorderwand eine einen Ausgießkanal bildende Ausguss-Vertiefung auf, über die ein Ausgießen des flüssigen oder teilflüssigen Garguts erfolgt.

Der Stand der Technik gemäß DE 10 2011 116 273 B4 weist eine Tropfkante auf, die sich unterhalb des Ausgusses des Garbehälters befindet.

Trotz dieser Tropfkante besteht beim Stand der Technik weiterhin der Nachteil, dass der Ausgussstrahl beim Kippen des Gasbehälters, insbesondere bei großer Füllhöhe im Garbehälter, das flüssige oder teilflüssige Nahrungsmittel teilweise an der Außenseite des Garbehälters entlangläuft und dort teilweise anhaftet bzw. nach unten läuft und auf den Boden tropft. Dies gilt es zu vermeiden.

Weiterer relevanter Stand der Technik ist aus den Dokumenten WO 2016/196796 A1, FR 2 070 617 A5 und EP 2 628 419 A1 bekannt.

Aufgabe der vorliegenden Erfindung ist es deshalb, ein Gargerät für Großküchen vorzuschlagen, welches diesen Nachteil überwindet und einen Aufbau aufweist, durch den verhindert wird, dass flüssige oder teilflüssige Nahrungsmittel beim Ausgießen an der Außenseite des Garbehälters entlangfließen.

Diese Aufgabe wird durch die Merkmale des Patentanspruchs 1 gelöst.

Die vorliegende Erfindung zeichnet sich dadurch aus, dass die Tropfkante aus einer Längsschiene gebildet ist, welche ein im Wesentlichen rechteckförmiges Querschnittsprofil mit einer eine Überlauffläche bildenden zumindest teilweise in Fließrichtung abgeschrägten Oberseite und eine im Wesentlichen parallel zur Abdeckfläche verlaufende Unterseite aufweist, wobei die abgeschrägte Oberseite sich schräg nach unten erstreckt.

Dadurch wird erreicht, dass der Ausgussstrahl des flüssigen oder teilflüssigen Garguts von der Außenseite der Vorderwand des Garbehälters so weit weggelenkt wird und abreißt, so dass er nicht mehr auf die Außenseite der Vorderwand trifft. Somit kann das flüssige Gargut ohne Verlust in den entsprechend vorbereiteten Auffangbehälter ausgegossen werden. Dies bringt die weiteren Vorteile mit sich, dass sowohl ein Reinigen der Bodenfläche unterhalb des Gargerätes als auch ein Reinigen der Außenseite der Vorderwand zum Entfernen der Nahrungsmittelreste vermieden werden kann.

Weiterhin ist vorteilhaft, dass die Schräge der abgeschrägten Oberseite einen Winkel zur oberen Abdeckfläche der Vorderwand von 5° bis 45°, bevorzugt 15° bis 35, und weiter bevorzugt im Wesentlichen 25° aufweist.

Weiterhin ergibt sich ein Vorteil daraus, dass die Tropfkante sich über einen größeren Bereich an der Kante der Vorderwand erstreckt als die Breite der Ausguss-Vertiefung beträgt. Damit wird erreicht, dass der komplette Ausgussstrahl aus dem Garbehälter über die Tropfkante abgeleitet wird und ein Entlangfließen an der Außenseite der Vorderwand sicher verhindert wird.

Weiterhin ist vorteilhaft, dass die Überlauffläche eine Breite von 5 bis 50 mm, bevorzugt 6 mm aufweist. Zwar ergibt sich aus strömungstechnischen Gründen die Tatsache, dass je breiter - hier bedeutet die Breite die Länge des Fließwegs auf der Tropfkante - die Tropfkante ist, desto weiter wird der Ausgussstrahl von der Außenseite der Vorderwand des Garbehälters weggelenkt. Eine breite Tropfkante hat jedoch im praktischen Einsatz des Garbehälters erhebliche Nachteile. Die Tropfkante befindet sich im vordersten Mittenbereich des Garbehälters, dem sich der Benutzer, vor allem der Koch im hektischen Küchenbetrieb, annähert. Je breiter die Tropfkante ist, desto störender ist sie deshalb. Hier schafft die vorliegende Erfindung den gro-βen Vorteil einer nur sehr geringen Breite der Tropfkante, welche nahezu keine Störung für den Koch im Küchenbetrieb verursacht. Zudem ist eine Tropfkante geringer Breite optisch sehr viel ansprechender.

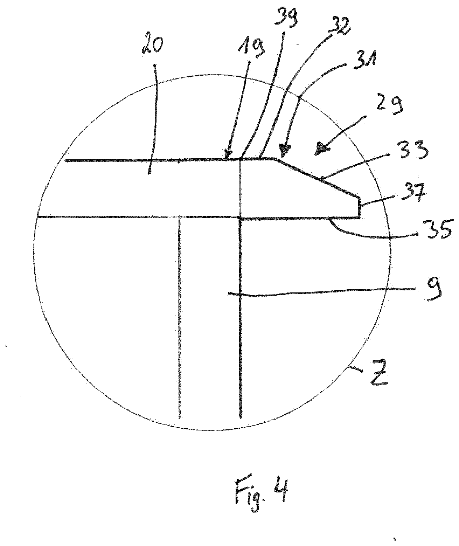

Auch ergibt sich ein Vorteil dadurch, dass die vordere Kante der Tropfkante aus einer im Wesentlichen vertikalen, geraden Endfläche gebildet ist, die eine Höhe von 0,25 mm bis 2 mm, bevorzugt 1 mm aufweist. Wenn die abgeschrägte Oberseite der Tropfkante zu der Unterseite spitz zuläuft, besteht eine gewisse Verletzungsgefahr aufgrund der messerartigen Kante. Um dies zu vermeiden, wird diese Kante quasi abgeschnitten, wodurch sich eine "stumpfe" Tropfkanten-Vorderseite (vgl. Fig. 4) ergibt.

Weiterhin ist vorteilhaft, dass der Winkel zwischen einer vertikalen Ebene am Aufstellungsort des Gargeräts und der Unterseite der Tropfkante zwischen 80° und 100°, bevorzugt im Wesentlichen 90° beträgt.

Ein weiterer Vorteil ergibt sich dadurch, dass die Tropfkante sich an die obere vordere Kante der Vorderwand des Garbehälters anschließt. Dadurch ergibt sich gegenüber dem nächstkommenden Stand der Technik ein stufenloser Übergang für den abfließenden Ausgussstrahl über die Abdeckfläche auf die Tropfkante, wodurch auch ein optisch sehr ansprechender Eindruck entsteht.

Noch ein weiterer Vorteil ergibt sich dadurch, dass die Tropfkante einstückig mit der Abdeckfläche bzw. der Abdeckplatte des Garbehälters ausgebildet ist. Neben dem besonders ansprechenden optischen Eindruck ergibt sich hier auch der weitere Vorteil eines fugenlosen Übergangs von der Abdeckfläche auf die Tropfkante.

Weitere Einzelheiten, Merkmale und Vorteile ergeben sich aus der nachfolgenden Beschreibung unter Bezugnahme auf die beigefügte Zeichnung. Darin zeigt:
- Fig. 1: in perspektivischer Ansicht ein erfindungsgemäßes Großküchen-Gargerät in der Ausbildung als Großküchen-Druckgargerät;
- Fig. 2: in perspektivischer Ansicht isoliert den Garbehälter des Großküchen Gargerätes, jedoch in einer breiteren Ausführungsform als jener von Fig. 1;
- Fig. 3: eine Schnittansicht entlang der Mittenachse des Garbehälters von Fig. 2; und
- Fig. 4: in vergrößerte Maßstab die Einzelheit Z von Fig. 3.

In den Figuren sind gleiche Elemente mit den gleichen Bezugsziffern bezeichnet.

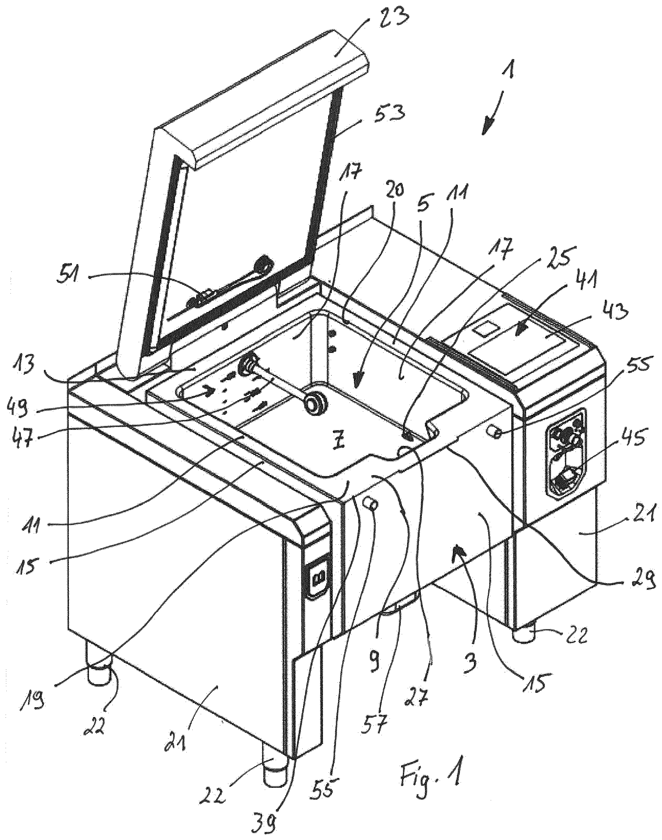

Es wird Bezug genommen auf Fig. 1. In dieser Figur ist ein erfindungsgemäßes Gargerät 1 in perspektivische Ansicht dargestellt. Es handelt sich um ein Druckgargerät mit einem kippbaren tiegelförmigen Garbehälter 3, der einen im Wesentlichen rechteckförmigen Garraum 5 zur Aufnahme von insbesondere flüssigem oder teilflüssigem Gargut aufweist. Der rechteckförmige Garbehälter 3 weist einen Boden 7, eine Vorderwand 9, zwei Seitenwände 11 und eine Rückwand 13 auf. Jede der Wände 9, 11, 13 weist eine Außenseite 15 und eine davon beabstandete Innenseite 17 auf, wobei der Zwischenraum zwischen der Außenseite 15 und der Innenseite 17 an der Oberseite der Wände mit einer eine obere Abdeckfläche 19 aufweisenden oberen Abdeckplatte 20 abgedeckt ist. Im dargestellten Ausführungsbeispiel nach Fig. 1 ist die Abdeckplatte 20 einteilig ausgebildet und bildet quasi einen Rahmen zur Abdeckung des Raumes einer jeden Wand zwischen deren Außenseite und Innenseite. Dadurch ergibt sich eine ununterbrochene obere Abdeckfläche 19.

In der Vorderwand 9 ist, im Beispielsfall mittig, ein Ausgießkanal 25 in Form einer Ausguss-Vertiefung 27 ausgebildet. Die Ausguss-Vertiefung 27 erstreckt sich in Richtung Außenseite 15 der Vorderwand 9, wodurch die Abdeckfläche 19 in diesem Abschnitt gegenüber deren seitlichen Abschnitten verringert ist.

Im Bereich der Ausguss-Vertiefung 27 und seitlich darüber hinaus ist an der oberen vorderen Kante 39 der Vorderwand 9 eine Tropfkante 29 angeordnet. Die genauere Gestaltung der Tropfkante 29 wird weiter unten unter Bezugnahme auf Fig. 4 näher erläutert.

Der kippbare tiegelförmige Garbehälter 3 ist drehbar in zwei seitlichen Gerätestützen 21 gelagert, die ihrerseits sich auf einstellbaren Stützfüßen 22 abstützen. Die Stützfüße 22 sind deshalb einstellbar, weil am Aufstellungsort sich der Garbehälter in exakter horizontaler Ausrichtung befinden muss, um einen einwandfreien Betrieb zu gewährleisten.

Der Garbehälter 3 ist mit einem Gerätedeckel 23 verschließbar, wobei eine Abdichtung des Gerätedeckels 23 auf dem Garbehälter 3 durch eine entsprechende am Gerätedeckel 23 umlaufende Dichtung 53 vorgesehen ist, die in Anlage auf die obere Abdeckfläche 19 kommt. Wird das Gargerät 1 im Druckgarbetrieb betrieben, muss der Gerätedeckel 23 druckdicht den Garbehälter 3 abdichten. Damit der Deckel sicher diese Dichtfunktion erfüllt ist eine Deckelverriegelung 55 vorgesehen, die ein Aufdrücken des Gerätedeckels 23 bei Überdruck im Garraum 5 sicher verhindert.

In der rechten Gerätestütze 21 ist eine Eingabe- und Bedieneinrichtung 41 an der Oberseite angebracht, die in herkömmlicher Weise einen Touchscreen 43 aufweist. Da es sich bei dieser Eingabe- und Bedieneinrichtung 41 um ein Element des Standes der Technik handelt, wird an dieser Stelle nicht weiter darauf eingegangen.

In der rechten Gerätestütze 21 sind auch noch weitere Elemente in der Frontseite angeordnet, wie beispielsweise eine übliche Schlauchbrause 45.

In Fig. 1 ist weiterhin dargestellt eine Reinigungslanze 47, die zur Reinigung des Garraums 5 eingesetzt werden kann, wobei sie nur für den Reinigungsbetrieb montiert wird. Im Garbetrieb wird die Reinigungslanze 47 in einem Aufbewahrungsbehälter 57 unterhalb des Bodens 7 des Garbehälters 3 verstaut.

Als übliches Zusatzgerät zum Garen von festem Gargut, wie Braten ist für die Erfassung des Garzustandes ein Kerntemperaturfühler 51 vorgesehen, der an der Unterseite des Gerätedeckels 23 in seiner Ruheposition in Fig. 1 dargestellt ist.

An der Innenseite 17 der Rückwand 13 sind in Fig. 1 weiterhin Füllstandmarkierungen 49 ersichtlich, die dem Bediener, also vor allem dem Koch, auf einen Blick den entsprechenden Füllstand des eingefüllten Garguts erkennen lassen, sodass er auf einen Blick die eingefüllte Menge erkennen kann.

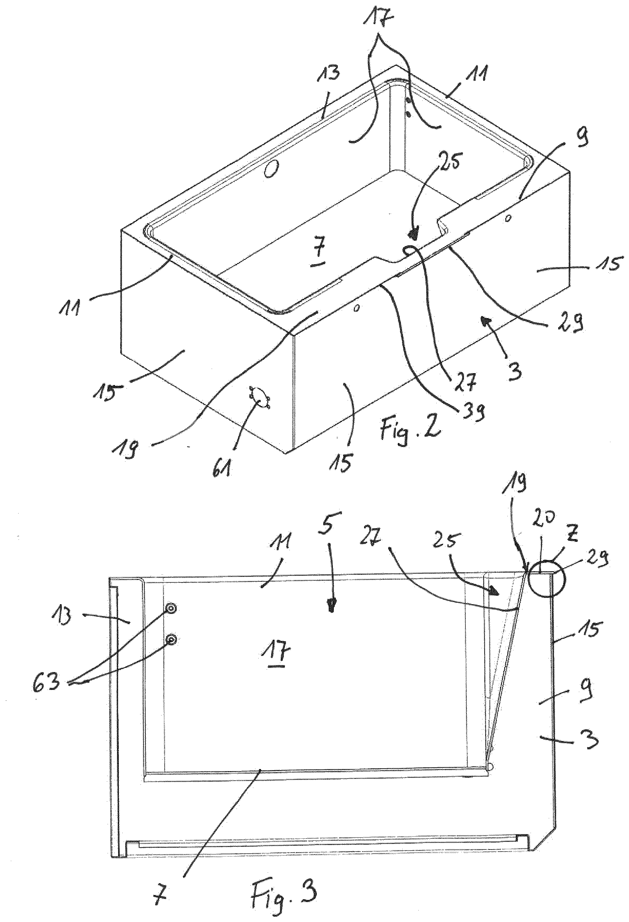

Es wird nunmehr Bezug genommen auf Fig. 2, in der in perspektivischer Ansicht ein Garbehälter 3 isoliert dargestellt ist, wobei der Unterschied zum Garbehälter nach Fig. 1 nur die größere Breite des Behälters ist. In dieser Darstellung sieht man auch die Öffnung 61 für die Lagerachse des Garbehälters 3 um die der Garbehälter 3 kippbar ist. Dadurch ergibt sich, dass beim Kippen die Rückwand 13 mit den damit verbundenen Elementen nach oben bewegt wird und sich die Vorderwand 9 insgesamt am wenigsten bewegt, was den Vorteil hat, dass die Ausgießmenge im Wesentlichen an einer Stelle auftrifft. Der Behälter, der die Ausgießmenge aufnehmen soll, muss nicht verschoben werden.

In Fig. 3 ist im Schnitt entlang der Mittenlinie des Garbehälters 3 von Fig. 1 der Aufbau des Garbehälters 3 verdeutlicht und daraus ersichtlich, wie klein die Tropfkante 29 ausgebildet ist. Die beiden Befestigungspunkte 63 dienen zur Aufnahme bzw. dem einhängen von Gargutkörben. Aus Fig. 3 geht auch näher die Ausbildung der Ausguss-Vertiefung 27 hervor.

In Fig. 4 ist in deutlich vergrößertem Maßstab die Einzelheit Z von Fig. 3 dargestellt. Hieraus ergibt sich genauer die Ausgestaltung der Tropfkante 29.

Die Tropfkante 29 weist einen grundsätzlich rechteckförmigen Aufbau in ihrem Querschnittsprofil auf, wobei sie eine Überlauffläche 31 aufweist, die im dargestellten Ausführungsbeispiel eine abgeschrägte Oberseite 33 aufweist. Diese schließt sich in der dargestellten Ausführungsform an einen geraden Überlaufflächenabschnitt 32 an und verläuft in Fließrichtung des Ausgussstrahls schräg nach unten. Der gerade Überlaufflächenabschnitt 32 schließt sich an die obere Abdeckfläche 19 in deren Ebene an. Die Unterseite 35 der Tropfkante 29 verläuft im Wesentlichen parallel zur oberen Abdeckfläche 19. An ihrem vorderen Ende endet die Tropfkante 29 in einer senkrechten geraden Endfläche 37, die die vordere Kante bildet. Der Endabschnitt 37 beträgt im bevorzugten Ausführungsbeispiel im Wesentlichen 1 mm, wobei seine Größe sich in einem Bereich von 0,25 mm bis 2mm bewegen kann.

Die Schräge der schrägen Oberseite 33 der Tropfkante 29 weist einen Winkel zur oberen Abdeckfläche 19 der Vorderwand 9 von 5° bis 45°, bevorzugt 15° bis 35°, und weiter bevorzugt 25° auf. Gerade mit dem bevorzugten Winkel von 25° konnten von der Anmelderin experimentell besonders gute Ausgießeigenschaften festgestellt werden, unter Vermeidung eines Rückfließens des Ausgießstrahls auf die und Auftreffen auf der Außenseite 15 der Vorderwand 9 mit anschließendem Abtropfen auf den Boden der Küche bzw. des Aufstellungsortes des Gargerätes 1.

Wie aus Fig. 4 ersichtlich, schließt die Tropfkante 29 unmittelbar an die obere vordere Kante 39 der Vorderwand 9 des Garbehälters 3 an. In einer bevorzugten Ausführungsform ist die Tropfkante 29 mit der die obere Abdeckfläche 19 aufweisenden oberen Abdeckplatte 20 einstückig ausgebildet.

Mit der vorliegenden Erfindung wird somit ein Gargerät, insbesondere ein Druckgargerät, geschaffen, welches eine Tropfkante aufweist, die ein vollständiges und gezieltes Ausgießen eines im Garbehälter gegarten flüssigen oder teilflüssigen Garguts ermöglicht, ohne dass der Ausgießstrahls auf die Vorderwand auftrifft, an dieser herunterläuft und auf den Boden der Küche bzw. des Aufstellortes auftrifft. Dabei ist die Dimension der Tropfkante so gering wie möglich gewählt. Eine kleine Tropfkante ist optisch ansprechender und übt keinen störenden Einfluss beim Betrieb und Bedienen des Gargerätes durch den Bediener, in der Regel den Koch, aus.

### Bezugszeichenliste:

1 - Gargerät
3 - Garbehälter
5 - Garraum
7 - Boden
9 - Vorderwand
11 - Seitenwand
13 - Rückwand
15 - Außenseite
17 - Innenseite
19 - obere Abdeckfläche
20 - Abdeckplatte
21 - Gerätestütze
22 - einstellbarer Stützfuß
23 - Gerätedeckel
25 - Ausgießkanal
27 - Ausguss-Vertiefung
29 - Tropfkante
31 - Überlauffläche
32 - gerader Überlaufflächenabschnitt
33 - abgeschrägte Oberseite
35 - Unterseite
37 - gerade Endfläche
39 - obere vordere Kante
41 - Eingabe- und Bedieneinrichtung
43 - Touchscreen
45 - Schlauchbrause
47 - Reinigungslanze
49 - Füllstandmarkierungen
51 - Kerntemperaturfühler
53 - Deckeldichtung
55 - Deckelverriegelung
57 - Aufbewahrungsbehälter für Reinigungslanze
61 - Öffnung für Lagerachse
63 - Befestigungspunkte für Gargutkörbe

## Patentansprüche

1. Gargerät (1) für Großküchen, einschließlich Großküchen-Druckgargerät, mit einem kippbaren tiegelförmigen Garbehälter (3), der einen im Wesentlichen rechteckförmigen Garraum (5) zur Aufnahme von insbesondere flüssigem oder teilflüssigem Gargut aufweist,
wobei der Garbehälter (3) einen Boden (7), eine Vorderwand (9), zwei Seitenwände (11) und eine Rückwand (13) aufweist, wobei jede der Wände (9, 11, 13) aus einer Außenseite (15) und einer davon beabstandeten Innenseite (17) gebildet sind, die mit einer eine obere Abdeckfläche (19) bildenden Abdeckplatte (20) miteinander verbunden sind, wobei die Innenseiten (17) der Wände (9, 11, 13) den Garraum (5) umschließen,
wobei der Garbehälter (3) einseitig oder beidseitig in Gerätestützen (21) drehbar gelagert ist und von einem Gerätedeckel (23) verschließbar ist, wobei der Garbehälter (3) in seiner Vorderwand (9) eine einen Ausgießkanal (25) bildende Ausguss-Vertiefung (27) aufweist, über die ein Ausgießen des flüssigen oder teilflüssigen Garguts erfolgt, und
wobei eine Tropfkante (29) vorgesehen ist, die dazu dient, eine Lenkung des Ausgussstrahls des flüssigen oder teilflüssigen Nahrungsmittels weg von der Außenseite (15) der Vorderwand (9) zu erzeugen,
**dadurch gekennzeichnet,**
**dass** die Tropfkante (29) aus einer Längsschiene gebildet ist, welche ein im Wesentlichen rechteckförmiges Querschnittsprofil mit einer eine Überlauffläche (31) bildenden zumindest teilweise in Fließrichtung abgeschrägten Oberseite (33) und eine im Wesentlichen parallel zur oberen Abdeckfläche (19) verlaufende Unterseite (35) aufweist, wobei sich die abgeschrägte Oberseite (33) in Fließrichtung schräg nach unten erstreckt.

2. Gargerät nach Anspruch 1, **dadurch gekennzeichnet, dass** die Schräge der schrägen Oberseite (33) einen Winkel zur oberen Abdeckfläche (19) der Vorderwand (9) von 5° bis 45°, bevorzugt 15° bis 35°, und weiter bevorzugt 25° aufweist.

3. Gargerät nach Anspruch 1 oder 2, **dadurch gekennzeichnet, dass** die Tropfkante (29) sich über einen größeren Bereich an der Kante der Vorderwand (9) erstreckt als die Breite der Ausguss-Vertiefung (27) beträgt.

4. Gargerät nach einem der Ansprüche 1 bis 3, **dadurch gekennzeichnet, dass** die Überlauffläche (33) eine Breite von 5 bis 50 mm, bevorzugt 6 mm aufweist.

5. Gargerät nach einem der Ansprüche 1 bis 4, **dadurch gekennzeichnet, dass** die vordere Kante der Tropfkante (29) aus einer im Wesentlichen vertikalen geraden Endfläche (37) gebildet ist, der eine Höhe von 0,25 mm bis 2 mm, bevorzugt 1 mm aufweist.

6. Gargerät nach einem der Ansprüche 1 bis 5, **dadurch gekennzeichnet, dass** der Winkel zwischen einer vertikalen Ebene am Aufstellungsort des Gargeräts und der Unterseite (35) der Tropfkante zwischen 80° und 100°, bevorzugt im Wesentlichen 90° beträgt.

7. Gargerät nach einem der Ansprüche 1 bis 5, **dadurch gekennzeichnet, dass** die Tropfkante (29) sich an die obere vordere Kante (39) der Vorderwand (9) des Garbehälters (3) anschließt.

8. Gargerät nach Anspruch 7, **dadurch gekennzeichnet, dass** die Tropfkante (29) einstückig mit der Abdeckfläche (19) bzw. der Abdeckplatte (20) des Garbehälters (3) ausgebildet ist.

## Claims

1. Cooking appliance (1) for large-capacity kitchens, including large-capacity-kitchen pressure cooker, having a tiltable, pan-shaped cooking vessel (3) which has a substantially rectangular cooking chamber (5) for receiving in particular liquid or partially liquid food to be cooked,
wherein the cooking vessel (3) has a base (7), a front wall (9), two side walls (11) and a rear wall (13), wherein each of the walls (9, 11, 13) is formed from an outer side (15) and an inner side (17) spaced apart therefrom, said outer side and inner side being connected to one another by a covering plate (20) forming an upper covering surface (19), the inner sides (17) of the walls (9, 11, 13) surrounding the cooking chamber (5),
wherein the cooking vessel (3) is mounted rotatably on one side or both sides in appliance supports (21) and is closable by an appliance lid (23),
wherein the front wall (9) of the cooking vessel (3) has a spout recess (27) which forms a pouring-out channel (25) and via which the liquid or partially liquid food to be cooked is poured out, and wherein a drip edge (29) is provided which serves to guide the spout stream of the liquid or partially liquid food away from the outer side (15) of the front wall (9),
**characterized**
**in that** the drip edge (29) is formed from a longitudinal rail which has a substantially rectangular cross-sectional profile with an upper side (33) which forms an overflow surface (31) and is at least partially bevelled in the flow direction and a lower side (35) running substantially parallel to the upper covering surface (19), the bevelled upper side (33) extending obliquely downwards in the flow direction.

2. Cooking appliance according to Claim 1, **characterized in that** the slope of the oblique upper side (33) has an angle of 5° to 45°, preferably 15° to 35°, and more preferably 25°, with respect to the upper covering surface (19) of the front wall (9).

3. Cooking appliance according to Claim 1 or 2, **characterized in that** the drip edge (29) extends over a larger region at the edge of the front wall (9) than the width of the spout recess (27).

4. Cooking appliance according to one of Claims 1 to 3, **characterized in that** the overflow surface (33) has a width of 5 to 50 mm, preferably 6 mm.

5. Cooking appliance according to one of Claims 1 to 4, **characterized in that** the front edge of the drip edge (29) is formed from a substantially vertical rectilinear end surface (37) which has a height of 0.25 mm to 2 mm, preferably 1 mm.

6. Cooking appliance according to one of Claims 1 to 5, **characterized in that** the angle between a vertical plane at the installation site of the cooking appliance and the lower side (35) of the drip edge is between 80° and 100°, preferably substantially 90°.

7. Cooking appliance according to one of Claims 1 to 5, **characterized in that** the drip edge (29) adjoins the upper front edge (39) of the front wall (9) of the cooking vessel (3).

8. Cooking appliance according to Claim 7, **characterized in that** the drip edge (29) is formed integrally with the covering surface (19) or the covering plate (20) of the cooking vessel (3).

## Revendications

1. Appareil de cuisson (1) pour grandes cuisines, y compris appareil de cuisson sous pression pour grandes cuisines, avec un contenant de cuisson (3) basculant en forme de poêlon, qui présente un espace de cuisson (5) essentiellement rectangulaire pour recevoir un produit de cuisson notamment liquide ou partiellement liquide, le contenant de cuisson (3) présentant un fond (7), une paroi avant (9), deux parois latérales (11) et une paroi arrière (13), chacune des parois (9, 11, 13) étant formée d'un côté extérieur (15) et d'un côté intérieur (17) espacé de celui-ci, qui sont reliés entre eux par une plaque de recouvrement (20) formant une surface de recouvrement supérieure (19), les côtés intérieurs (17) des parois (9, 11, 13) entourant l'espace de cuisson (5), le contenant de cuisson (3) étant monté d'un côté ou des deux côtés de manière rotative dans des raccords d'appareil (21) et pouvant être fermé par un couvercle d'appareil (23),
le contenant de cuisson (3) présentant dans sa paroi avant (9) un renfoncement de déversement (27) formant un canal de déversement (25), par lequel s'effectue un déversement du produit de cuisson liquide ou partiellement liquide, et
un bord d'égouttage (29) étant prévu, qui sert à produire un guidage du jet de déversement de l'aliment liquide ou partiellement liquide à l'écart du côté extérieur (15) de la paroi avant (9),
**caractérisé en ce que**
le bord d'égouttage (29) est formé d'un rail longitudinal qui présente un profil de section transversale essentiellement rectangulaire avec un côté supérieur (33) au moins partiellement biseauté dans la direction d'écoulement, formant une surface de débordement (31), et un côté inférieur (35) s'étendant essentiellement parallèlement à la surface de recouvrement supérieure (19), le côté supérieur biseauté (33) s'étendant en oblique vers le bas dans la direction d'écoulement.

2. Appareil de cuisson selon la revendication 1, **caractérisé en ce que** la pente du côté supérieur oblique (33) forme avec la surface de recouvrement supérieure (19) de la paroi avant (9) un angle de 5° à 45°, de préférence de 15° à 35°, et de préférence encore de 25°.

3. Appareil de cuisson selon la revendication 1 ou 2, **caractérisé en ce que** le bord d'égouttage (29) s'étend sur une zone plus grande sur le bord de la paroi avant (9) que la largeur du renfoncement de déversement (27).

4. Appareil de cuisson selon l'une quelconque des revendications 1 à 3, **caractérisé en ce que** la surface de débordement (33) présente une largeur de 5 à 50 mm, de préférence de 6 mm.

5. Appareil de cuisson selon l'une quelconque des revendications 1 à 4, **caractérisé en ce que** le bord avant du bord d'égouttage (29) est formé d'une surface d'extrémité droite (37) essentiellement verticale, qui présente une hauteur de 0,25 mm à 2 mm, de préférence 1 mm.

6. Appareil de cuisson selon l'une quelconque des revendications 1 à 5, **caractérisé en ce que** l'angle entre un plan vertical à l'emplacement d'installation de l'appareil de cuisson et le côté inférieur (35) du bord d'égouttage est compris entre 80° et 100°, de préférence est d'essentiellement 90°.

7. Appareil de cuisson selon l'une quelconque des revendications 1 à 5, **caractérisé en ce que** le bord d'égouttage (29) se raccorde au bord avant supérieur (39) de la paroi avant (9) du contenant de cuisson (3).

8. Appareil de cuisson selon la revendication 7, **caractérisé en ce que** le bord d'égouttage (29) est formé d'un seul tenant avec la surface de recouvrement (19) ou la plaque de recouvrement (20) du contenant de cuisson (3) .
